# EUROPEAN PATENT APPLICATION

(11) **EP 4 530 516 A1**
(43) Date of publication of application: **02.04.2025**
(21) Application number: 23814744.1
(22) Date of filing: 30.03.2023
(51) Int. Cl.: F16L 37/084, H01R 13/627, H01R 13/502, F04B 39/12

(54) **QUICK CONNECTION STRUCTURE AND CONTROL BOX**

(30) Priority: 31.05.2022 CN 202210616060; 31.05.2022 CN 202221353825 U
(71) Applicant: Bewatec (Zhejiang) Medical Devices Co., Ltd, Jiaxing, Zhejiang 314000 (CN); Bewatec (Shangai) Medical Devices Co., Ltd., Shanghai 201702 (CN)
(72) Inventor: ZHU, Zhenjie, Jiaxing, Zhejiang 314000 (CN); XU, Baowei, Jiaxing, Zhejiang 314000 (CN); LI, Shengcong, Jiaxing, Zhejiang 314000 (CN); PAN, Jian, Jiaxing, Zhejiang 314000 (CN)
(74) Representative: Grünecker Patent- und Rechtsanwälte PartG mbB
(86) International application number: PCT/CN2023/085013
(87) International publication number: WO 2023/231548

(57) **Abstract**

Provided is a quick connect structure. The quick connect structure includes a socket and a plug assembly. The plug assembly is inserted into the socket. The plug assembly includes a fixing member, a moving member, and an elastic member. The fixing member is connected to the moving member. The fixing member is inserted into and mates with the socket. The moving member is configured to engage with or disengage from the socket after moving relative to the fixing member. The elastic member is configured to reset the position of the moving member relative to the fixing member.

## Description

This application claims priority to Chinese Patent Application No. 202210616060.0 filed May 31, 2022 and Chinese Patent Application No. 202221353825.8 filed May 31, 2022, the disclosures of which are incorporated herein by reference in their entireties.

### TECHNICAL FIELD

The present application relates to the field of quick connect technologies, for example, a quick connect structure and a control box.

### BACKGROUND

In the field of medical devices, many devices require air pumps to transport air to other parts of the devices for detection or treatment. This type of device generally includes a control box and an external component. The air pump is located in the control box, and the external component and the control box are connected via a quick connect structure.

The related art discloses a quick connect structure. The quick connect structure includes a single-row connector and a socket fixed on the housing of the control box. The structure of the socket is similar to the multi-row shunt connector structure in the related art. A press plate, a flexible connecting portion, and a snap hook are provided on the sidewall of the single-row connector. A snap groove is provided on the sidewall of the socket. When the single-row connector engages with the socket, the snap hook is located in the snap groove. During the disassembly process, the staff presses the press plate to deform the flexible connecting portion, thereby driving the snap hook to move outward. At this time, the snap hook and the snap groove disengage from each other, and the single-row connector is pulled out to be separated from the socket. The mounting process is similar to the disassembly process. After the press plate is pressed to deform the flexible connecting portion, the single-row connector is inserted into the socket, the snap hook is aligned with the snap groove, and then the press plate is released.

The shortcoming of the preceding is that the press plate, the flexible connecting portion, and the snap hook are generally integrally formed through plastic injection molding. As the number of disassembly and assembly times increases, the flexible connecting portion is prone to irreparable deformation due to fatigue, resulting in the failure of the snap fit. If the snap fit fails, the single-row connector needs to be replaced as a whole.

### SUMMARY

The present application provides a quick connect structure and a control box, which can solve the problem that the quick connect structure is prone to failure due to fatigue.

The present application provides a quick connect structure. The quick connect structure includes a socket and a plug assembly. The plug assembly is inserted into the socket. The plug assembly includes a fixing member, a moving member, and an elastic member. The fixing member is connected to the moving member. The fixing member is inserted into and mates with the socket. The moving member is configured to engage with or disengage from the socket after moving relative to the fixing member. The elastic member is configured to reset the position of the moving member relative to the fixing member.

An embodiment of the present application further introduces a control box having the preceding quick connect structure.

### BRIEF DESCRIPTION OF DRAWINGS

FIG. 1 is an exploded view of embodiment one of the present application.
FIG. 2 is a sectional view highlighting the mating structure of a plug assembly and a socket in embodiment one of the present application.
FIG. 3 is a sectional view highlighting the snap-fit structure between a moving member and a socket in embodiment one of the present application.
FIG. 4 is a sectional view highlighting the positional relationship between a moving member, a fixing member, and a socket in embodiment one of the present application.
FIG. 5 is a sectional view highlighting the positional relationship between a moving member, a fixing member, and a socket in embodiment three of the present application.
FIG. 6 is a sectional view highlighting the positional relationship between a moving member, a fixing member, and a socket in embodiment four of the present application.
FIG. 7 is a schematic view illustrating the external structure of embodiment six of the present application.
FIG. 8 is a schematic view illustrating the external structure of embodiment seven of the present application.
FIG. 9 is a schematic view highlighting the position of a switch spring contact in embodiment seven of the present application.
FIG. 10 is a schematic view of a plug having a plug assembly in embodiment two of the present application.
FIG. 11 is a sectional view highlighting a protective housing and a switching member in embodiment seven of the present application.
FIG. 12 is a sectional view highlighting the mating structure of a guide column and a guide hole in embodiment two of the present application.

### Reference list

- 1: socket
- 11: positioning portion
- 111: sliding surface
- 12: fitting
- 13: plugboard
- 14: avoidance hole
- 2: plug assembly
- 21: fixing member
- 211: clearance hole
- 212: clearance groove
- 22: moving member
- 222: snap hook
- 223: press button
- 23: elastic member
- 24: gap
- 25: accommodation portion
- 3: air pipe fitting
- 31: retaining ring
- 32: fixing bolt
- 41: guide plate
- 411: guide column
- 42: guide groove
- 421: guide hole
- 4: protective housing
- 44: connecting hole
- 5: switching member
- 51: communication hole
- 6: box body
- 61: switch spring contact

### DETAILED DESCRIPTION

In the description of the present application, the terms "joined", "connected", and "fixed" are to be understood in a broad sense unless otherwise expressly specified and limited. For example, the term "connected" may refer to "fixedly connected", "detachably connected", or "integrated", may refer to "mechanically connected" or "electrically connected", or may refer to "connected directly", "connected indirectly through an intermediary", "connected inside two components", or an interaction relation between two components. For those of ordinary skill in the art, specific meanings of the preceding terms in the present application may be understood based on specific situations.

In the present application, unless otherwise expressly specified and limited, when a first feature is described as "on" or "below" a second feature, the first feature and the second feature may be in direct contact or be in contact via another feature between the two features instead of being in direct contact. Moreover, when the first feature is described as "on", "above", or "over" the second feature, the first feature is right on, above, or over the second feature, the first feature is obliquely on, above, or over the second feature, or the first feature is simply at a higher level than the second feature. When the first feature is described as "under", "below", or "underneath" the second feature, the first feature is right under, below, or underneath the second feature, the first feature is obliquely under, below, or underneath the second feature, or the first feature is simply at a lower level than the second feature.

In the description of this embodiment, orientations or position relations indicated by terms such as "above", "below", "left", and "right" are based on the drawings. These orientations or position relations are intended only to facilitate the description and simplify the operation and not to indicate or imply that a device or element referred to must have such particular orientations or must be configured or operated in such particular orientations. Thus, these orientations or position relations are not to be construed as limiting the present application. In addition, the terms "first" and "second" are only used for distinguishing between descriptions and have no special meanings.

### Embodiment one

In the related art, a plug in a quick connect structure is integrally provided with a press plate, a flexible connecting portion, and a snap hook, and a snap groove is provided on the sidewall of a socket. When the plug is inserted into the socket in a snap-fit manner, the snap hook is located in the snap groove. During both the disassembly and mounting processes, the staff needs to press the press plate to deform the flexible connecting portion, thereby driving the snap hook to move outward. During disassembly, the plug is pulled out to be separated from the socket; during mounting, the plug is inserted into the socket, the snap hook is aligned with the snap groove, and then the press plate is released. In the preceding technology, the plug is generally integrally formed by plastic. As the use time increases, the flexible connecting portion deforms repeatedly and is prone to irreparable deformation due to fatigue, resulting in the failure of the snap fit. After the snap fit fails, the plug needs to be replaced as a whole, which is costly.

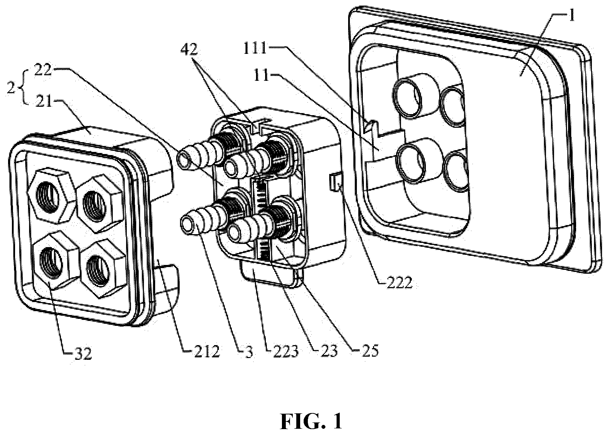

For the preceding problem, the present application introduces a quick connect structure. As shown in FIG. 1, the quick connect structure includes a socket 1 and a plug assembly 2. The plug assembly 2 is inserted into and mates with the socket 1. After the plug assembly 2 is inserted into the socket 1, the plug assembly 2 and the socket 1 can engage with each other or disengage from each other. An air pipe fitting 3 is provided on the plug assembly 2. The air pipe fitting 3 is fixedly connected to the plug assembly 2. A circular tubular fitting 12 is provided in the socket 1. An air pipe is connected to the inner side of the fitting 12. When the plug assembly 2 engages with the socket 1, the air pipe fitting 3 is docked and connected with the fitting 12. At this time, the air pipe fitting 3 communicates with the air pipe to achieve the docking of the pipes. A sealing ring may be provided between the air pipe fitting 3 and the fitting 12 to increase the sealing performance between the air pipe fitting 3 and the fitting 12.

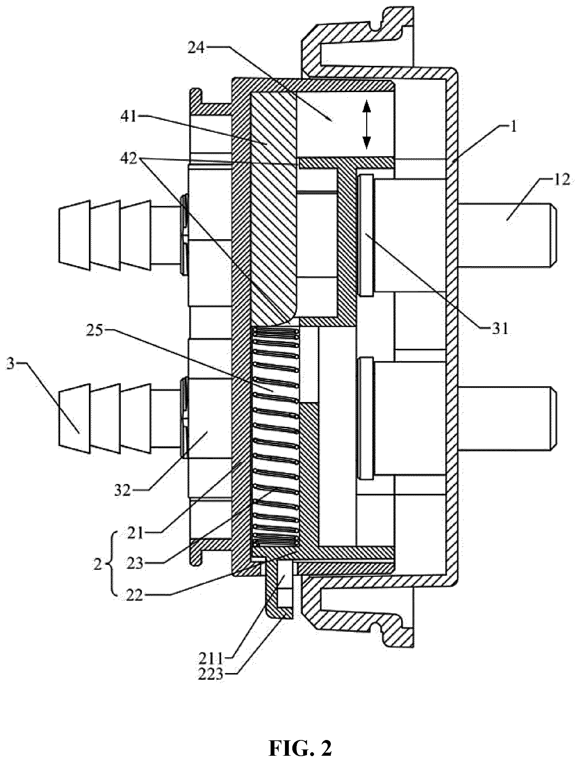

In an embodiment, as shown in FIGS. 1 and 2, the plug assembly 2 includes a fixing member 21, a moving member 22, and an elastic member 23.

The fixing member 21 and the moving member 22 are hollow housings. The fixing member 21 and the moving member 22 are fastened, that is to say, the moving member 22 is accommodated in the fixing member 21, or the fixing member 21 is accommodated in the moving member 22. In this embodiment, the case where the moving member 22 is accommodated in the fixing member 21 is introduced. In other embodiments, the fixing member 21 may be accommodated in the moving member 22.

In an embodiment, the moving member 22 is configured to be semi-enclosed or fully enclosed in the fixing member 21. In this embodiment, the moving member 22 is semi-enclosed in the fixing member 21, thereby facilitating the disassembly of the moving member 22 and the fixing member 21. In other embodiments, the moving member 22 may be fully enclosed in the fixing member 21.

As shown in FIG. 2, after the fixing member 21 and the moving member 22 are fastened, a gap 24 exists between the sidewall of the fixing member 21 and the sidewall of the moving member 22 in at least one direction, the moving member 22 is slidably connected to the fixing member 21, and the sliding direction of the moving member 22 is perpendicular to the gap 24, that is, the gap 24 provides space for the sliding of the moving member 22. When the moving member 22 slides relative to the fixing member 21, the elastic member 23 is mainly used for resetting the position of the moving member 22 relative to the fixing member 21. Two ends of the elastic member 23 and the fixing member 21 and the moving member 22 in one-to-one correspondence, and the two ends of the elastic member 23 abut against or are fixed to the fixing member 21 and the moving member 22.

When the plug assembly 2 is inserted into the socket 1, the fixing member 21 is inserted into and mates with the socket 1, and the moving member 22 engages with the socket 1. As the moving member 22 slides in the fixing member 21, the moving member 22 and the socket 1 are engaged or disengaged from each other. In this case, the snap-fit mounting or disassembly between the plug assembly 2 and the socket 1 can be achieved. In this case, relying on the elastic effect of the elastic member 23, the position of the moving member 22 relative to the fixing member 21 can be kept stable so that the engagement state between the moving member 22 and the socket 1 can be maintained.

The plug assembly 2 includes the fixing member 21, the moving member 22, and the elastic member 23, the gap 24 exists between the moving member 22 and the fixing member 21, the moving member 22 slidably mates with the fixing member 21, the elastic member 23 is used for resetting the position of the moving member 22 in the fixing member 21, the fixing member 21 is inserted into the socket 1, and the moving member 22 engages with the socket 1. In this case, when the plug assembly 2 engages with or disengages from the socket 1, all elastic force is provided by the elastic member 23. In this case, the elastic member 23 may be made of a material with higher fatigue strength to reduce the possibility of the failure of the snap fit.

In an embodiment, the cross section of at least one of the fixing member 21 and the moving member 22 is square, circular, or oblong and may be other shapes. In this embodiment, the fixing member 21 and the moving member 22 are square.

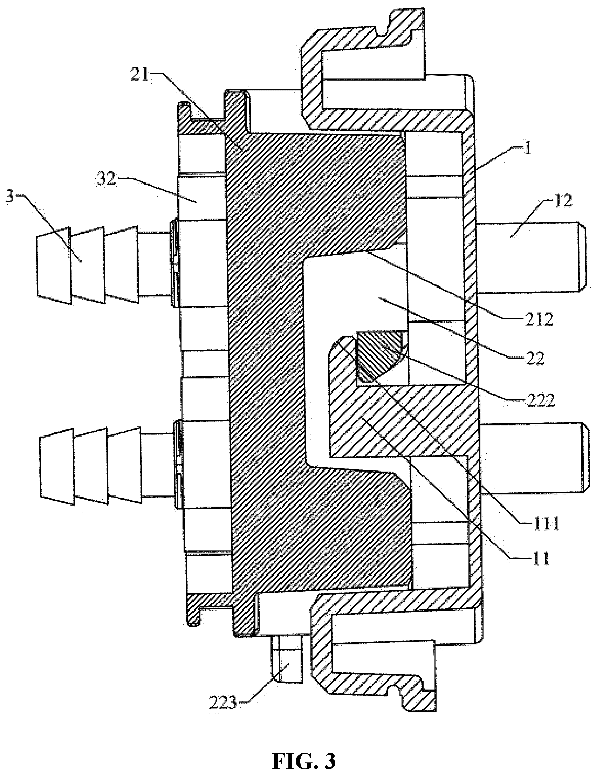

In an embodiment, as shown in FIGS. 1 and 3, a snap hook 222 is provided on a sidewall of the moving member 22 parallel to the sliding direction of the moving member 22. The snap hook 222 is generally integrally formed with the moving member 22. A positioning portion 11 is provided on the sidewall of the socket 1. When the fixing member 21 is inserted into the socket 1, the snap hook 222 abuts against or disengages from the positioning portion 11 as the moving member 22 slides. An external force is applied to the moving member 22 so that the moving member 22 slides relative to the fixing member 21, that is, the moving member 22 slides relative to the socket 1. In this manner, the snap hook 222 disengages from the positioning portion 11. At this time, it can be ensured that the moving member 22 smoothly disengages from the socket 1 by pulling out the plug assembly 2. If the plug assembly 2 and the socket 1 need to be mounted, an external force is applied to the moving member 22 so that the moving member 22 slides relative to the fixing member 21, that is, the moving member 22 slides relative to the socket 1, and the elastic member 23 deforms due to the sliding of the moving member 22 relative to the fixing member 21. At this time, the position of the snap hook 222 avoids the positioning portion 11, and the fixing member 21 is inserted into the socket 1. Then, the external force is removed, the elastic member 23 resets the position of the moving member 22 relative to the fixing member 21 through the elastic force, and the snap hook 222 abuts against the positioning portion 11. At this time, the moving member 22 engages with the socket 1. In this manner, it is ensured that the moving member 22 can stably engage with the socket 1 in a natural state without the external force.

In this embodiment, as shown in FIG. 3, the positioning portion 11 protrudes from the sidewall of the socket 1, the positioning portion 11 is provided with a sliding surface 111, and the sliding surface 111 is inclined. During the insertion mating process between the plug assembly 2 and the socket 1, the snap hook 222 on the moving member 22 is in contact with the sliding surface 111, and the snap hook 222 can slide along the sliding surface 111, thereby forcing the moving member 22 to slide relative to the fixing member 21. When the snap hook 222 slides to the end of the sliding surface 111, through the elastic force of the elastic member 23, the moving member 22 is reset to drive the snap hook 222 to move and engage with the positioning portion 11. In this case, during the process of inserting and mounting the plug assembly 2, no external force is manually applied to the moving member 22, and the moving member 22 can be driven to slide relative to the fixing member 21 by the movement of the snap hook 222 along the sliding surface 111.

The side surface of the snap hook 222 may be configured to be an inclined curved surface so that during the process of inserting the plug assembly 2 into the socket 1, the moving member 22 can be driven to slide relative to the fixing member 21.

In other embodiments, the positioning portion 11 may be a groove provided on the sidewall of the socket 1. Similarly, in other embodiments, the snap hook 222 may be disposed on the sidewall of the socket 1, and the positioning portion 11 may be disposed on the moving member 22.

The fixing member 21 and the moving member 22 need to be fixed along the insertion direction of the plug assembly 2 and the socket 1, and the moving member 22 needs to slide relative to the fixing member 21 in a direction perpendicular to the gap 24. In this case, a limiting structure needs to be provided between the fixing member 21 and the moving member 22. For example, waist-shaped holes need to be provided on the sidewall of the fixing member 21 and the sidewall of the moving member 22, respectively, the length direction of the waist-shaped holes is the same as the sliding direction of the moving member 22, and a limiting pin passes through each waist-shaped hole so that the limiting pin penetrates both the fixing member 21 and the moving member 22, thereby limiting the position of the moving member 22 relative to the fixing member 21 along the insertion direction of the plug assembly 2 and the socket 1. Alternatively, the moving member 22 is completely accommodated in the fixing member 21, thereby limiting the position of the moving member 22 relative to the fixing member 21 along the insertion direction of the plug assembly 2 and the socket 1. The direction of the gap is the direction of the arrows shown in FIG. 2.

In this embodiment, as shown in FIG. 2, the position of the moving member 22 relative to the fixing member 21 is limited by the air pipe fitting 3, a retaining ring 31 is provided at a first end of the air pipe fitting 3, external threads are provided at a second end of the air pipe fitting 3, and the retaining ring 31 protrudes from the outer circumferential surface of the air pipe fitting 3. When the air pipe fitting 3 is mounted, the air pipe fitting 3 penetrates the bottom of the fixing member 21 and the bottom of the moving member 22, the air pipe fitting 3 is fixedly connected to the fixing member 21, and the moving member 22 is provided with an oblong hole for the air pipe fitting 3 to pass through. In this case, the retaining ring 31 is located on a side of the moving member 22 away from the fixing member, the external threads are located on a side of the fixing member 21 away from the moving member 22, and a fixing bolt 32 is connected to the external threads of the air pipe fitting 3 so that the fixing bolt 32 and the retaining ring 31 can be used to limit the fixing member 21 and the moving member 22, thereby preventing the fixing member 21 and the moving member 22 from separating from each other. When the moving member 22 slides in the fixing member 21, the air pipe fitting 3 is moveable relative to the oblong hole, thereby ensuring the smooth sliding of the moving member 22.

In this embodiment, the elastic member 23 is a spring. In other embodiments, the elastic member 23 may be set to another elastic structure, such as elastic rubber. The elastic member 23 may be disposed in a variety of manners and positions as long as the elastic member 23 can reset the position of the moving member 22 in the fixing member 21. To locate the position of the elastic member 23 and ensure the deformation direction of the elastic member 23, in an embodiment, as shown in FIG. 2, an accommodation portion 25 is fixedly provided in the fixing member 21 or the moving member 22, the accommodation portion 25 is a rib protruding from the fixing member 21 or the moving member 22, and the elastic member 23 is accommodated in the accommodation portion 25 so that the elastic member 23 deforms in the accommodation portion 25, and it is ensured through the limitation of the accommodation portion 25 that the elastic member 23 deforms along the length direction of the accommodation portion 25.

To improve the reliability and stability of the sliding between the moving member 22 and the fixing member 21, in an embodiment, a guide structure is provided between the moving member 22 and the fixing member 21, and the guide structure is configured to guide the sliding of the moving member 22. In this embodiment, as shown in FIG. 2, the guide structure includes a guide plate 41 and a guide groove 42, the guide plate 41 is disposed on the fixing member 21, and the guide groove 42 is disposed on the moving member 22. In this embodiment, the guide plate 41 is integrally disposed on the fixing member 21, the guide groove 42 is formed on the moving member 22, the guide plate 41 and the guide groove 42 are connected in a sliding fit manner, and the length direction of the guide plate 41 is the same as the sliding direction of the moving member 22. The guide groove 42 may be formed on any sidewall of the moving member 22. In this embodiment, the guide groove 42 is formed on the sidewall of the moving member 22 and is located at the end of the accommodation portion 25.

In other embodiments, the guide structure may be a structure including a guide rod and a guide hole, the guide rod is inserted into the guide hole, the guide rod and the guide hole are disposed on the fixing member 21 and the moving member 22 in one-to-one correspondence, and the length direction of the guide rod is the same as the sliding direction of the moving member 22.

In addition, the fixing member 21 is inserted into the socket 1 in two manners. In one manner, the fixing member 21 is inserted into the inner side of the socket 1. In the other manner, the fixing member 21 is inserted into the outer side of the socket 1.

There are two positional relationships of the fastening between the moving member 22 and the fixing member 21. In one positional relationship, the moving member 22 is fastened in the fixing member 21. In the other positional relationship, the fixing member 21 is fastened in the moving member 22.

There are two positional relationships between the moving member 22, the fixing member 21, and the socket 1. In one positional relationship, the moving member 22 is located between the fixing member 21 and the socket 1. In the other positional relationship, the fixing member 21 is located between the moving member 22 and the socket 1.

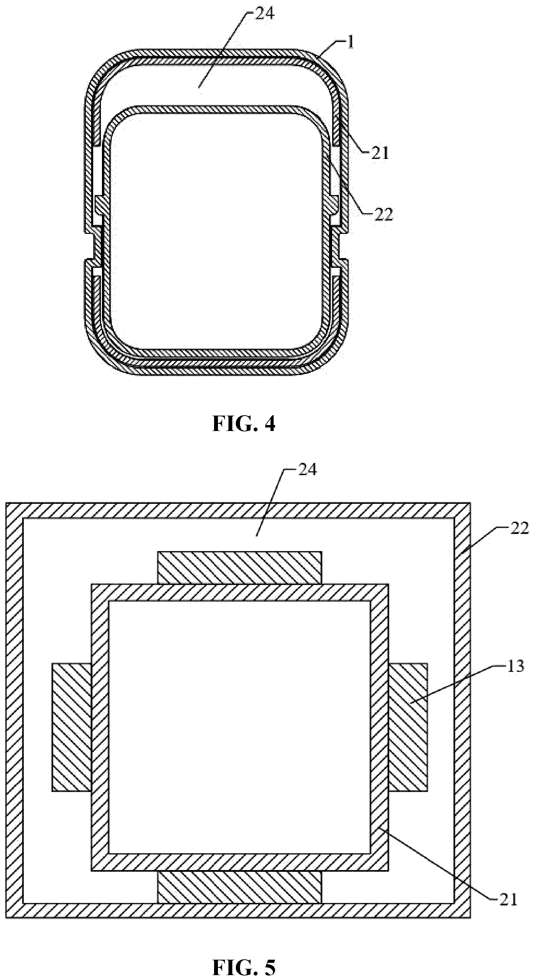

In the implementation manner introduced in this embodiment, as shown in FIG. 4, the moving member 22 is located between the fixing member 21 and the socket 1, the moving member 22 is fastened in the fixing member 21, and the fixing member 21 is inserted into the inner side of the socket 1.

In an embodiment, as shown in FIG. 2, a clearance hole 211 is provided on the sidewall of the fixing member 21, a press button 223 protrudes from the sidewall of the moving member 22, the press button 223 is located in the clearance hole 211 and penetrates out of the clearance hole 211, and the direction of the press button 223 sliding in the clearance hole 211 is the same as the sliding direction of the moving member 22. In this case, the press button 223 can be pressed from the outer side of the fixing member 21 so that the moving member 22 is driven to slide in the fixing member 21, and the snap-fit structure between the moving member 22 and the socket 1 is disengaged from each other, thereby facilitating the disassembly or mounting.

As shown in FIG. 1, a clearance groove 212 is provided on the sidewall of the fixing member 21 corresponding to the snap hook 222 to provide space for the movement and mounting of the snap hook 222.

The working principles of this embodiment are described below.

During the process of inserting the plug assembly 2 into the socket 1, the fixing member 21 is aligned with the socket 1, and then the plug assembly 2 is gradually pushed into the socket 1. During the pushing process, the snap hook 222 on the moving member 22 is in contact with the sliding surface 111 on the positioning portion 11, and the snap hook 222 can slide along the sliding surface 111, thereby forcing the moving member 22 to slide relative to the fixing member 21. When the snap hook 222 slides to the end of the sliding surface 111, through the elastic force of the elastic member 23, the moving member 22 is reset to drive the snap hook 222 to move to engage with the positioning portion 11.

When the plug assembly 2 and the socket 1 need to be disassembled, the press button 223 is pressed, and the press button 223 drives the moving member 22 to slide in the fixing member 21 so that the snap hook 222 disengages from the positioning portion 11. At this time, separation can be achieved by pulling out the plug assembly 2.

### Embodiment two

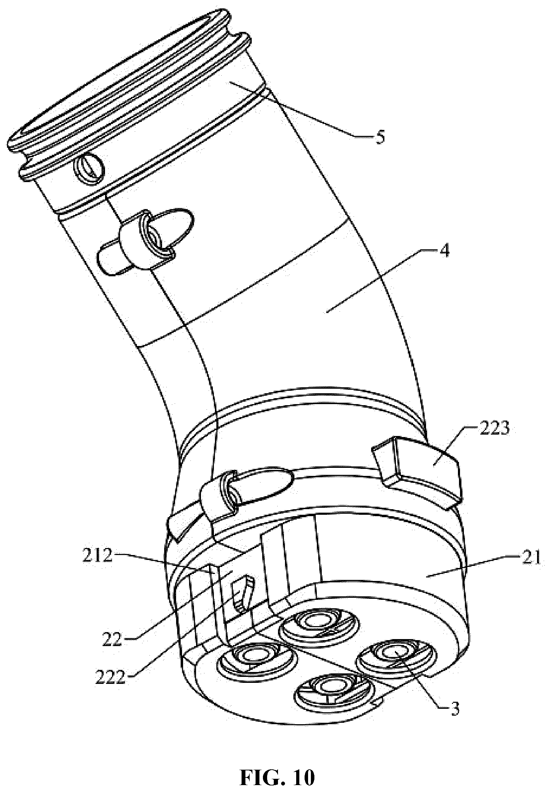

As shown in FIG. 10, the difference from embodiment one is that in this embodiment, the fixing member 21 and the moving member 22 are oblong, and the sliding direction of the moving member 22 relative to the fixing member 21 is the length direction of the oblong hole.

Further, when the plug assembly 2 is inserted into the socket 1, the fixing member 21 is located between the moving member 22 and the socket 1, and the moving member 22 is fully enclosed in the fixing member 21. To facilitate the mounting of the moving member 22, the fixing member 21 is mounted in a huff-mode splicing manner.

The air pipe fitting 3 is completely secured to the fixing member 21. A hole for the fitting 12 to be inserted into is provided at the bottom of the fixing member 21. An oblong hole for the air pipe fitting 3 to pass through is provided on the moving member 22. When the moving member 22 moves relative to the fixing member 21, the air pipe fitting 3 can move relatively in the oblong hole formed on the moving member 22.

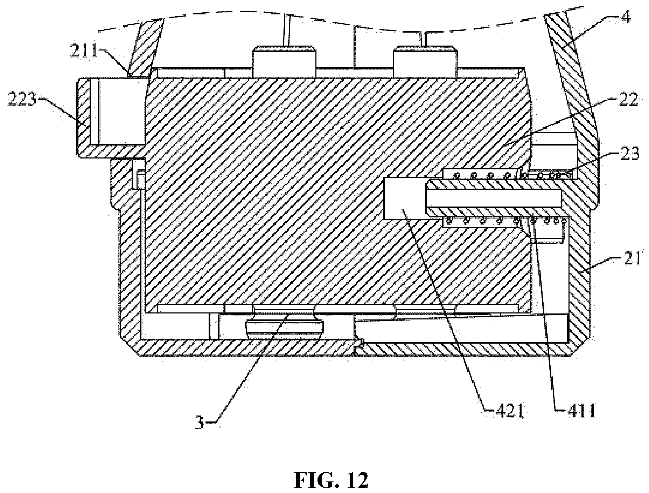

As shown in FIG. 12, in this embodiment, the guide structure between the fixing member 21 and the moving member 22 includes a guide column 411 and a guide hole 421, the guide column 411 is disposed on the fixing member 21, the guide hole 421 is disposed on the moving member 22, the guide column 411 is inserted into the guide hole 421 in a sliding fit manner, and the length direction of the guide column 411 is the same as the sliding direction of the moving member 22. In an embodiment, the guide hole 421 is a stepped hole, the guide column 411 is inserted into and slides in the guide hole 421, the elastic member 23 is accommodated in a hole with a larger diameter within the guide hole 421, the guide column 411 passes through the elastic member 23, a first end of the elastic member 23 abuts against the stepped surface of the guide hole 421, and a second end of the elastic member 23 abuts against the inner side surface of the fixing member 21 so that the resetting of the moving member 22 and the fixing member 21 can be achieved through the elastic force of the elastic member 23.

### Embodiment three

In this embodiment, the positional relationship between the fixing member 21, the moving member 22, and the socket 1 is different from that in embodiment one.

In an embodiment, as shown in FIG. 5, the fixing member 21 is fastened in the moving member 22, and the fixing member 21 is inserted into the inner side of the socket 1. In this case, a plugboard 13 protruding from the socket 1 is provided, the positioning portion 11 is disposed on the plugboard 13, the fixing member 21 is inserted into the inner side of the plugboard 13, that is, the inner side of the socket 1, the plugboard 13 is located between the fixing member 21 and the moving member 22, and the moving member 22 engages with the plugboard 13.

In addition, the moving member 22 is located between the fixing member 21 and the socket 1, or the fixing member 21 is located between the moving member 22 and the socket 1. When the moving member 22 is located between the fixing member 21 and the socket 1, the plugboard 13 passes through the moving member 22 and is inserted between the moving member 22 and the fixing member 21.

### Embodiment four

In this embodiment, the positional relationship between the fixing member 21, the moving member 22, and the socket 1 is different from that in embodiment one.

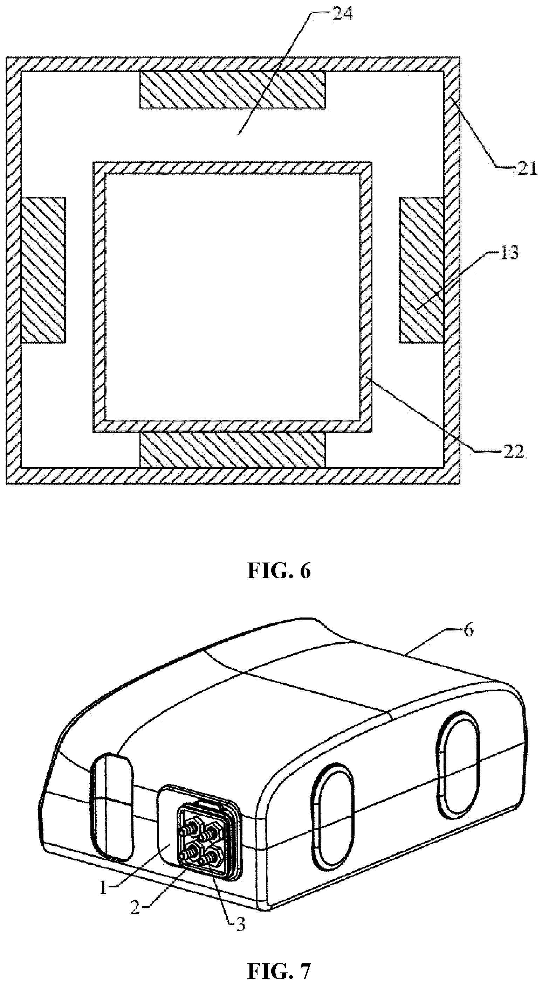

In an embodiment, as shown in FIG. 6, the moving member 22 is fastened in the fixing member 21, and the fixing member 21 is inserted into the outer side of the socket 1. In this case, the plugboard 13 protruding from the socket 1 is provided, the positioning portion 11 is disposed on the plugboard 13, the fixing member 21 is inserted into the outer side of the plugboard 13, that is, the outer side of the socket 1, the plugboard 13 is located between the fixing member 21 and the moving member 22, and the moving member 22 engages with the plugboards 13.

In addition, the moving member 22 is located between the fixing member 21 and the socket 1, or the fixing member 21 is located between the moving member 22 and the socket 1. When the fixing member 21 is located between the moving member 22 and the socket 1, the plugboard 13 passes through the fixing member 21 and is inserted between the moving member 22 and the fixing member 21.

### Embodiment five

The difference from embodiment one to embodiment four is that the moving member 22 is rotatably connected to the fixing member 21, and the moving member 22 and the fixing member 21 are generally configured to be cylindrical so that the moving member 22 is rotatable relative to the fixing member 21.

When the plug assembly 2 is inserted into the socket 1, the fixing member 21 is inserted into and mates with the socket 1, and the moving member 22 engages with the socket 1. As the moving member 22 rotates in the fixing member 21, the moving member 22 can engage with or disengage from the socket 1. In this case, the snap-fit mounting or disassembly between the plug assembly 2 and the socket 1 can be achieved. In this case, relying on the elastic effect of the elastic member 23, the position of the moving member 22 relative to the fixing member 21 can be kept stable so that the engagement state between the moving member 22 and the socket 1 can be maintained.

The elastic member 23 may be configured to be a torsion spring or the like.

### Embodiment six

As shown in FIG. 7, this embodiment introduces a control box, and the control box includes the quick connect structure in any one of embodiments one to five. The control box includes a box body 6. An air pump is provided in the box body 6. An air outlet of the air pump is connected to the fitting 12 on the socket 1 through an air pipe. The socket 1 is disposed on the outer sidewall of the box body 6. The air pipe fitting 3 is connected to the air pipe of the external device. The box body 6 can be quickly mounted on or removed from the external device through the quick connect structure.

### Embodiment seven

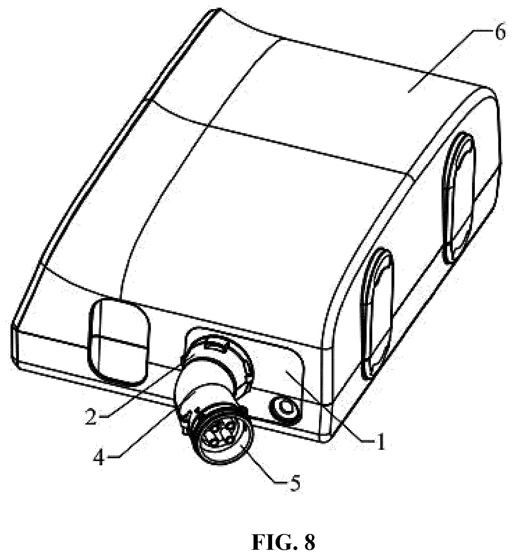

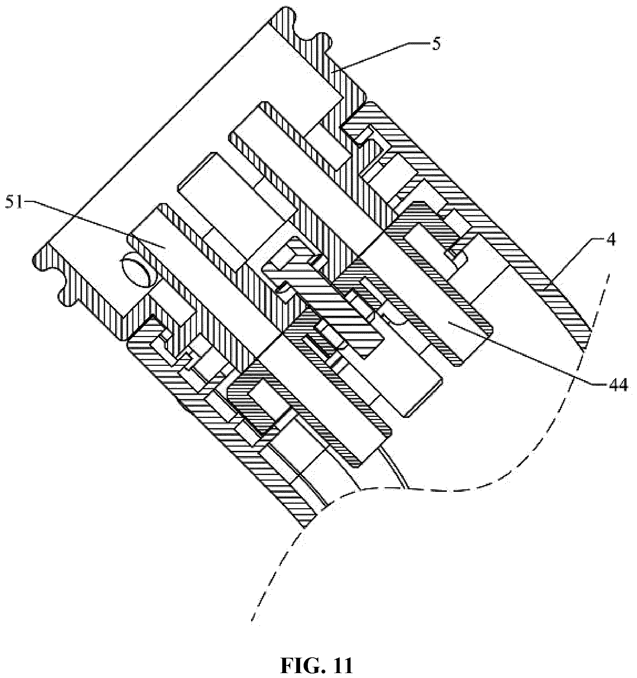

As shown in FIG. 8, based on embodiment six, a protective housing 4 and a switching member 5 are provided at an end of the plug assembly 2 away from the socket 1, the protective housing 4, the switching member 5, and the plug assembly 2 form a plug, a first end of the protective housing 4 is connected to the fixing member 21 in a sealing manner, a second end of the protective housing 4 is connected to the switching member 5, and the switching member 5 is configured to switch between the communication of the protective housing 4 with the switching member 5 and closure of the protective housing 4. As shown in FIG. 11, connecting holes 44 are provided at an end of the protective housing 4 facing the switching member 5, the connecting holes 44 and the air pipe fittings 3 are sealed and connected, and the connecting holes 44 are controlled by the switching member 5 to communicate with the switching member 5. In this case, the air pump may be used to supply air to the external device through the connecting holes 44 and the switching member 5. When the plug assembly 2 needs to be pulled out from the box body 6, the connecting holes 44 are controlled by the switching member 5 to be cut off from the switching member 5 to maintain the pressure of the external device, and then the plug assembly 2 is pulled out so that the following case can be avoided: the pressure in the external device quickly leaks out from the air pipe fittings 3 in the protective housing 4 after the plug assembly 2 is pulled out.

The protective housing 4 is configured such that the ends of the connecting holes 44 can be integrally connected to the protective housing 4 or the ends of the connecting holes 44 and the protective housing 4 can be connected in a split manner. The fixation and sealing between the connecting holes 44 and the protective housing 4 are achieved through the huff-mode structure of the protective housing 4.

In an example, the switching member 5 is provided with communication holes 51, the switching member 5 is rotatably connected to the end of the protective housing 4, and the rotation of the switching member 5 relative to the protective housing 4 can achieve the communication or misalignment between the connecting holes 44 and the communication holes 51. After the switching member 5 is rotated to align and connect the connecting holes 44 with the communication holes 51, the normal air supply from the air pump to the external device can be achieved. The switching member 5 is rotated to misalign the connecting holes 44 with the communication holes 51; at this time, the connecting holes 44 do not communicate with the communication holes 51 so that the pressure of the external device can be maintained.

The switching member 5 and the protective housing 4 are rotatably connected to each other via a rotary member, and the rotary member may be a bolt or a rotary shaft. When the rotary member is the bolt, by tightening the bolt, the distance between the switching member 5 and the protective housing 4 can be shortened to ensure that better sealing can be achieved when the connecting holes 44 and the communication holes 51 are misaligned.

In addition, the angle of rotation of the switching member 5 relative to the protective housing 4 can be limited. Generally, the angle of rotation is within 90° and may also be any other angle as long as it can ensure that the communication and misalignment between the connecting holes 44 and the communication holes 51 can be switched. Marks may be made on the outer sides of the switching member 5 and the protective housing 4 to determine the communication state between the switching member 5 and the protective housing 4.

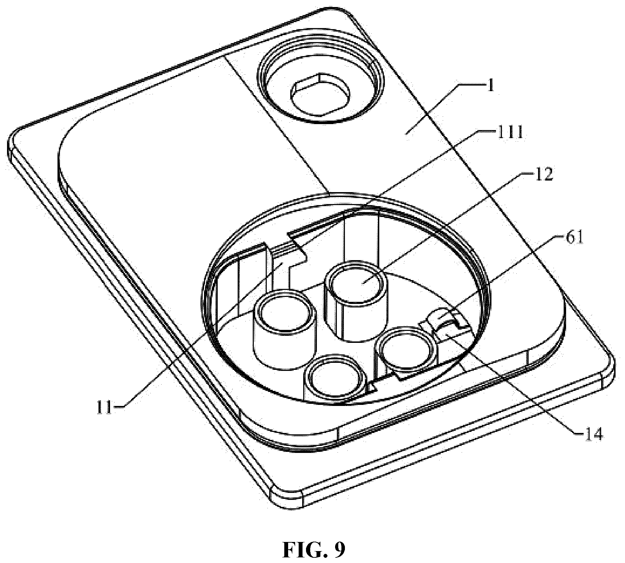

When the plug assembly 2 is inserted into the socket 1, if the insertion depth of the plug assembly 2 is insufficient, the insertion depth between the air pipe fittings 3 and the box body 6 may also be insufficient, thereby causing air leakage. To solve the preceding problem, in an embodiment, as shown in FIGS. 8 and 9, a microswitch is provided on the back of the socket 1, the microswitch includes a switch spring contact 61, a first end of the switch spring contact 61 is fixed to the back of the socket 1, a second end of the switch spring contact 61 extends into the socket 1, and the plug assembly 2 compresses the switch spring contact 61 to deform when the plug assembly 2 is inserted into and adapted to the socket 1. In an embodiment, an avoidance hole 14 is provided at the bottom or sidewall of the socket 1, and the free end of the switch spring contact 61 extends into the socket 1 from the avoidance hole 14. During the process of inserting the plug assembly 2 into the socket 1, once the plug assembly 2 is inserted in place, the plug assembly 2 touches the switch spring contact 61 and causes the switch spring contact 61 to deform. After the switch spring contact 61 deforms, a signal is generated and can be transmitted to a controller. After receiving the signal, the controller determines that the plug assembly 2 has been inserted; otherwise, the controller issues a reminder that the plug assembly 2 has not been inserted or has been inserted incorrectly.

## Claims

1. A quick connect structure, comprising a socket (1) and a plug assembly (2), wherein the plug assembly (2) is inserted into the socket (1);
wherein the plug assembly (2) comprises a fixing member (21), a moving member (22), and an elastic member (23), wherein the fixing member (21) is connected to the moving member (22), the fixing member (21) is inserted into and mates with the socket (1), the moving member (22) is configured to engage with or disengage from the socket (1) after moving relative to the fixing member (21), and the elastic member (23) is configured to reset a position of the moving member (22) relative to the fixing member (21).

2. The quick connect structure of claim 1, wherein the moving member (22) and the fixing member (21) are fastened, a gap (24) exists between a sidewall of the fixing member (21) and a sidewall of the moving member (22), the moving member (22) is slidably connected to the fixing member (21) along a direction perpendicular to the gap (24), and two ends of the elastic member (23) abut against or are fixed to the fixing member (21) and the moving member (22) in one-to-one correspondence.

3. The quick connect structure of claim 1, wherein the moving member (22) is located between the fixing member (21) and the socket (1).

4. The quick connect structure of claim 1, wherein the fixing member (21) is located between the moving member (22) and the socket (1).

5. The quick connect structure of claim 4, wherein the moving member (22) is configured to be fully enclosed or semi-enclosed in the fixing member (21).

6. The quick connect structure of claim 2, wherein a guide structure is provided between the moving member (22) and the fixing member (21) and is configured to guide sliding of the moving member (22).

7. The quick connect structure of claim 6, wherein the guide structure comprises a guide plate (41) and a guide groove (42), the guide plate (41) is disposed on the fixing member (21), the guide groove (42) is disposed on the moving member (22), the guide plate (41) and the guide groove (42) are connected in a sliding fit manner, and a length direction of the guide plate (41) is the same as a sliding direction of the moving member (22).

8. The quick connect structure of claim 6, wherein the guide structure comprises a guide column (411) and a guide hole (421), the guide column (411) is disposed on the fixing member (21), the guide hole (421) is disposed on the moving member (22), the guide column (411) is inserted into the guide hole (421) in a sliding fit manner, and a length direction of the guide column (411) is the same as a sliding direction of the moving member (22).

9. The quick connect structure of claim 2, wherein an accommodation portion (25) is fixedly provided in the fixing member (21) or the moving member (22), and the elastic member (23) is accommodated in the accommodation portion (25).

10. The quick connect structure of claim 1, wherein the fixing member (21) is inserted into an inner side or an outer side of the socket (1).

11. The quick connect structure of claim 2, wherein an air pipe fitting (3) is provided in the quick connect structure, the air pipe fitting (3) penetrates a bottom of the fixing member (21) and a bottom of the moving member (22), the air pipe fitting (3) is fixedly connected to the fixing member (21), and the moving member (22) is provided with an oblong hole for the air pipe fitting (3) to pass through.

12. The quick connect structure of any one of claims 1 to 11, wherein a cross section of at least one of the fixing member (21) and the moving member (22) is square, circular, or oblong.

13. The quick connect structure of claim 1, wherein the moving member (22) is rotatably connected to the fixing member (21).

14. The quick connect structure of any one of claims 1 to 11 and 13, wherein a snap hook (222) is provided on a sidewall of the moving member (22), a positioning portion (11) is provided on a sidewall of the socket (1), and the moving member (22) is configured such that when the fixing member (21) is inserted into the socket (1), the snap hook (222) abuts against or disengages from the positioning portion (11) as the moving member (22) moves relative to the fixing member (21).

15. The quick connect structure of any one of claims 1 to 11 and 13, wherein a microswitch is provided on a back of the socket (1), the microswitch comprises a switch spring contact (61), a first end of the switch spring contact (61) is fixed to the back of the socket (1), a second end of the switch spring contact (61) extends into the socket (1), and the plug assembly (2) is configured to compress the switch spring contact (61) to deform when the plug assembly (2) is inserted into and adapted to the socket (1).

16. The quick connect structure of any one of claims 1 to 11 and 13, wherein a protective housing (4) and a switching member (5) are provided at an end of the plug assembly (2) away from the socket (1), a first end of the protective housing (4) is connected to the fixing member (21) in a sealing manner or a first end of the protective housing (4) and the fixing member (21) are integrally formed, a second end of the protective housing (4) is connected to the switching member (5), and the switching member (5) is configured to switch between communication of the protective housing (4) with the switching member (5) and closure of the protective housing (4).

17. The quick connect structure of claim 16, wherein a connecting hole (44) is provided at an end of the protective housing (4) facing the switching member (5), the switching member (5) is provided with a communication hole (51), the switching member (5) is rotatably connected to an end of the protective housing (4), the switching member (5) is rotatably connected to the protective housing (4), and the connecting hole (44) communicates with or is misaligned with the communication hole (51).

18. A control box, comprising a box body (6) and the quick connect structure of any one of claims 1 to 17, wherein an air pump is provided in the box body (6), an air outlet of the air pump is connected to a fitting (12) on the socket (1) through an air pipe, and the socket (1) is disposed on an outer sidewall of the box body (6).
